Europäisches Patentamt

European Patent Office

Office européen des brevets

(19)

(11) Veröffentlichungsnummer: **0 393 385**
**A2**

(12) # EUROPÄISCHE PATENTANMELDUNG

(21) Anmeldenummer: **90105651.5**

(51) Int. Cl.⁵: **A47J 31/36, A47J 31/54**

(22) Anmeldetag: **24.03.90**

(30) Priorität: **19.04.89 DE 3912788**

(43) Veröffentlichungstag der Anmeldung:
**24.10.90 Patentblatt 90/43**

(84) Benannte Vertragsstaaten:
**AT BE CH DE ES FR GB IT LI NL**

(71) Anmelder: **NIRO-PLAN AG**
**Baarerstr. 59**
**CH-6300 Zug(CH)**

(72) Erfinder: **Der Erfinder hat auf seine Nennung
verzichtet**

(74) Vertreter: **Brommer, Hans Joachim, Dr.-Ing. et
al
Patentanwälte Dipl.-Ing. R. Lemcke Dr.-Ing.
H.J. Brommer Bismarckstrasse 16 Postfach
4026
D-7500 Karlsruhe 1(DE)**

(54) **Kaffeemaschine.**

(57) Die ·Erfindung betrifft eine Kaffeemaschine, bei
der die Heißwasser-Erzeugung durch einen an sich
bekannten rohrförmigen Durchlauferhitzer erfolgt.
Wesentlich dabei ist, daß das Volumen dieses
Durchlauferhitzers nur etwa 0,1 Liter bis 0,5 Liter
beträgt.

Fig. 4

EP 0 393 385 A2

## Kaffeemaschine

Die Erfindung geht aus von einer Kaffeemaschine mit zumindest einem dem Wassereintritt nachgeschalteten Filter und zumindest einer Pumpe, an die zumindest ein elektrisch beheizter Strömungskanal zur Erzeugung von Heißwasser angeschlossen ist, das in vorbestimmbarer Menge zu einem Brühkolben und schließlich zum Kaffee-Auslauf gelangt.

Derartige Kaffeemaschinen sind zur gewerblichen Verwendung bestimmt und in zahlreichen Ausführungsformen bekannt.

Die Heißwassererzeugung erfolgt dabei grundsätzlich in sogenannten Boilern. Dies sind relativ große Behälter mit einem Wasservolumen von mehreren Litern, meistens etwa 5 Liter, entsprechend dem Bedarf von etwa 40 Tassen.

Die Erhitzung des Wassers erfolgt dabei durch eine im Inneren des Boilers angeordnete Widerstands-Heizung, die in direktem Kontakt mit dem zu erhitzenden Wasser steht und die durch eine Temperatursteuerung den Wasserinhalt auf dem gewünschten Temperaturniveau hält.

Zur Regulierung der Frischwasserzufuhr benötigt der Boiler eine Niveauüberwachung, die bei Unterschreiten eines bestimmten Mindestwertes die Zufuhr von Frischwasser auslöst, bis der obere Niveauwert erreicht ist.

Das eingangs genannte relativ große Boilervolumen stellt sicher, daß diese intervalliartige Frischwasserzufuhr keine zu starke Absenkung der mittleren Wassertemperatur im Boiler hervorruft und daß Verbrauchsspitzen mit einem Wärmebedarf oberhalb der Heizleistung des Boilers kurzzeitig gedeckt werden können.

Nachteilig an diesen Boilern sind vor allem ihre hohen Herstellungskosten und ihr Platzbedarf. Darüberhinaus gestatten sie aufgrund der sich einstellenden Temperaturschichtung und der intervallartigen Frischwasserzufuhr keine derart feinfühlige Temperaturregelung, wie dies für die optimale Kaffee- und Teezubereitung wünschenswert wäre.

Der vorliegenden Erfindung liegt deshalb die Aufgabe zugrunde, die eingangs beschriebene Kaffeemaschine derart zu verbessern, daß sie sich durch günstigere Herstellungskosten, geringeren Platzbedarf und genauere Temperatureinhaltung des erzeugten Heißwassers auszeichnet.

Diese Aufgabe wird erfindungsgemäß dadurch gelöst, daß der Strömungskanal durch einen an sich bekannten rohrförmigen Durchlauferhitzer gebildet ist, an dessen Außenwand eine mit ihr metallisch verbundene Heizschlange angebracht ist, daß das Volumen des Durchlauferhitzers maximal das dreifache Kaffeetas sen-Volumen, zweckmäßig maximal 1,0 Liter beträgt und daß das Frischwasser zumindest annähernd kontinuierlich entsprechend der Wasserabgabe in den Durchlauferhitzer nachfließt.

. Durch den Ersatz des bisher üblichen Boilers durch einen Durchlauferhitzer ergibt sich zum einen eine drastische Reduzierung der Baugröße: Das Volumen des Wassererhitzers reduziert sich auf etwa 1/10. Zum anderen kann auf die bisher übliche Steuerung der Wasserzufuhr verzichtet und statt dessen mit direktem Anschluß des Erhitzers an die Pumpe, also mit kontinuierlich nachlaufendem Frischwasser gearbeitet werden. Dadurch ergibt sich eine weitere Reduzierung des Materialeinsatzes und der Herstellungskosten und darüberhinaus ist sichergestellt, daß kein abgestandenes, sondern immer frisches Wasser für die Kaffee- oder Teezubereitung verwendet wird.

Nicht zuletzt ist aufgrund des geringen Wasservolumens im Durchlauferhitzer eine wesentlich feinfühligere Regulierung der Wassertemperatur gewährleistet.

Im Sinne einer Minimierung des Platzbedarfes empfiehlt es sich, daß das Volumen des Durchlauferhitzers maximal 0,5 Liter, zweckmäßig etwa 0,15 Liter bis etwa 0,4 Liter beträgt und daß der Wassereintritt in den Durchlauferhitzer kontinuierlich und proportional entsprechend der Wasserabgabe erfolgt.

Außerdem erhält man dadurch ein besonders schnelles und genaues Aufheizen des Frischwassers.

Aufgrund der kompakten und kostengünstigen Bauweise kann für die Erzeugung von Kaffeewasser, Teewasser und Dampf jeweils ein eigener Durchlauferhitzer vorgesehen werden. Da jeder Durchlauferhitzer seine eigene Temperatursteuerung aufweist, ist eine optimale Anpassung der Temperaturverhältnisse an den gewünschten Brühvorgang möglich. Die Qualität des erzeugten Getränkes wird dadurch merklich verbessert.

Zur Verbesserung des Wärmeüberganges empfiehlt es sich, daß die Durchlauferhitzer vertikal stehend eingebaut sind und daß die Heizschlange unter Zwischenlage einer Lötfolie mit der Außenwand des rohrförmigen Durchlauferhitzers verlötet ist. Die Heizschlange kann aus einzelnen, in beliebiger Richtung verlaufenden Abschnitten bestehen, sie kann aber auch schrau bengangförmig um den Durchlauferhitzer herumlaufen. Zur Vermeidung einer Aufheizung der Umgebung kann sie außen durch eine Isolierung abgedeckt werden. Auch kann es zweckmäßig sein, daß sich die Heizschlange nur über einen Teilbereich, zweckmäßig einen unteren Teilbereich des Durchlauferhitzers erstreckt, während der obere Bereich als Mischkammer fungiert.

Zur einfachen Montage des Durchlauferhitzers empfiehlt es sich, daß er aus einem kreiszylindrischen Rohr besteht, das an seinem oberen und unteren Ende mit Dichtungsringen in passende Endkappen eingesetzt ist, die ihrerseits axial miteinander verspannbar sind.

Die vorbeschriebenen Merkmale, wie sie auch in den Ansprüchen 1 bis 14 aufgeführt sind, eignen sich nicht nur für Kaffeemaschinen sondern kommen allgemein für Rohrheizer zur Wassererhitzung in Betracht, sei es zur Bereitung von Heißgetränken wie auch zur Dampferzeugung für Kochgeräte.

Eine besonders zweckmäßige Ausbildung eines Rohreheizers, der zur Wassererhitzung für Getränkeerzeuger wie auch für Dampfkocher geeignet ist, zeichnet sich dadurch aus, daß im Inneren des Rohrheizers ein zylindrischer Einsatz etwa koaxial unter Bildung eines Spaltes gegenüber der Heizer-Innenwand angeordnet ist, der an seinem einen Ende verschlossen, an seinem anderen Ende mit Ausströmöffnungen versehen ist, die in den ge nannten Spalt münden, wobei die Wasserzufuhr in den zylindrischen Einsatz erfolgt.

Dadurch ergeben sich im wesentlichen zwei Vorteile: Einerseits wird entlang der beheizten Wand des Durchlauferhitzers eine dünne Spaltströmung erzeugt, die sich aufgrund der notwendigerweise hohen Strömungsgeschwindigkeit und des dünnen Flüssigkeitsfilmes durch besonders hohe Wärmeübergangskoiffizienten auszeichnet und eine homogene Erwärmung der Flüssigkeit garantiert. Andererseits erfährt die ankommende Flüssigkeit, die zunächst dem Inneren des zylindrischen Einsatzes zugeführt wird, eine Vorerwärmung durch Wärmeaustausch mit der auf höherer Temperatur befindlichen äußeren Spaltströmung, wodurch insbesondere die bei der elektrischen Widerstandsbeheizung auftretende Nachheizphase besser ausgenützt werden kann.

Besonders günstig ist es, wenn die Wasserzufuhr in den zylindrischen Einsatz nicht im Bereich seiner Ausströmöffnungen, sondern am entgegengesetzten Ende erfolgt, etwa indem ein koaxiales Wasserzuführrohr verwendet wird, das den zylindrischen Einsatz durchquert und bis nahe an dessen geschlossenes Ende läuft. Dadurch wird die Flüssigkeit gezwungen, den beheizten Axialbereich dreimal zu durchströmen mit von innen nach außen ansteigender Temperatur. Durch den Wärmeaustausch zwischen den einzelnen Strömungswegen ergibt sich eine weitere Erhöhung der Heizleistung.

Im allgemeinen empfiehlt es sich, daß die Spaltströmung im Rohrheizer von unten nach oben läuft. In diesem Fall ist der zylindrische Einsatz an seinem oberen Ende verschlossen, wogegen er unten mit den Ausströmöffnungen an den Spalt angeschlossen ist.

Die Form des Spaltes kann rund oder mehreckig sein.

Weitere Einzelheiten und Vorteile der Erfindung ergeben sich aus der nachfolgenden Beschreibung eines Ausführungsbeispieles anhand der Zeichnung; dabei zeigt:

Fig. 1 ein Fließschema der Kaffeemaschine;

Fig. 2 eine vergrößerte, teilweise geschnittene Seitenansicht des Durchlauferhitzers;

Fig. 3 eine um 90° geklappte Seitenansicht von Fig.2 und

Fig. 4 eine Weiterentwicklung des Durchlauferhitzers.

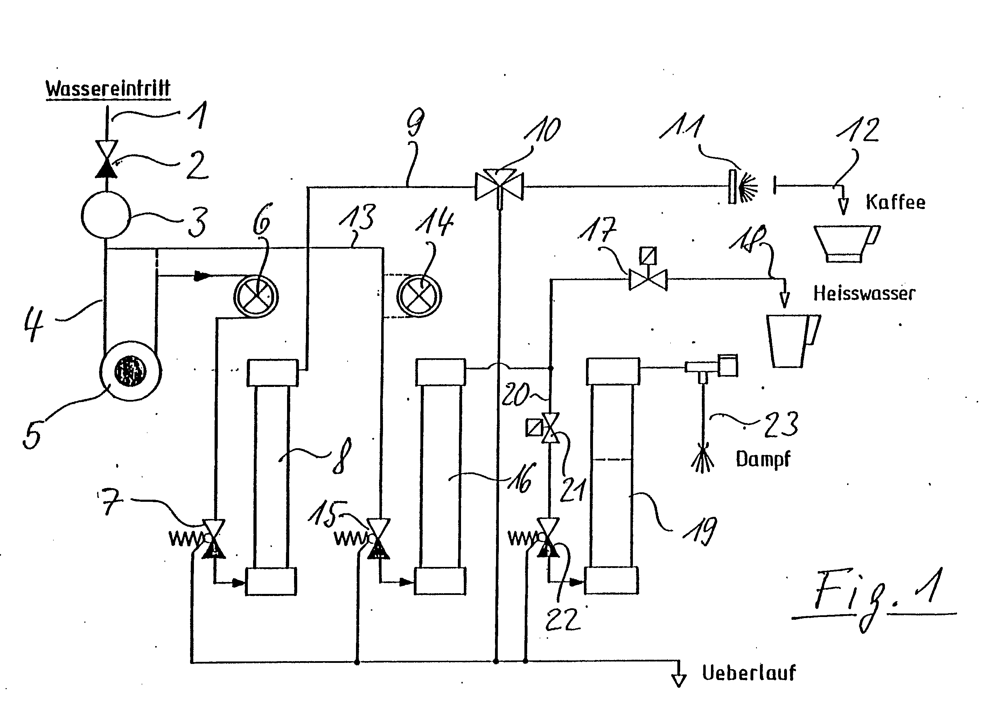

Wie Fig. 1 zeigt, ist hinter dem Frischwassereintritt 1 der Kaffeemaschine ein Absperrventil 2 und ein Filter 3 angeordnet. Hinter dem Filter 3 läuft eine für die Kaf fee-Zubereitung vorgesehene Leitung 4 zu einer Pumpe 5, die das Frischwasser über ein Volumenmeßgerät 6 für die Wasser-Dosierung und ein Ventil 7 dem unteren Ende eines rohrförmigen Durchlauferhitzers 8 zuführt. Dort wird das Wasser auf die zur Kaffee-Zubereitung optimale Temperatur erhitzt und am oberen Ende über eine Leitung 9 den Brüh- und Entlastungsventil 10 und von dort dem nur schematisch angedeuteten Brühkolben 11 zugeführt. Von dort gelangt der fertige Kaffee zu einem Auslauf 12.

Außerdem zweigt hinter dem Filter 3 eine zweite Leitung 13 ab. Sie enthält das für die Teezubereitung benötigte Wasser und läuft entweder über eine Mengendosierung 14 oder über ein nicht dargestelltes manuelles Ventil, das mit dem ohnehin vorhandenen Sicherheits- und Rückschlagventil 15 kombiniert sein kann, in das untere Ende eines zweiten Durchlauferhitzers 16. Dort wird das Wasser auf eine im Vergleich zum Kaffee höhere Temperatur erhitzt, wie sie bei der Tee-Zubereitung optimal ist. Das erhitzte Wasser strömt dann über ein manuelles oder automatisches Auslaßventil 17 zum Heißwasser-Auslaß 18.

Schließlich ist die erfindungsgemäße Kaffeemaschine noch mit einem dritten Durchlauferhitzer 19 zur Dampferzeugung ausgerüstet. Er wird über eine Leitung 20, ein Ventil 21 und das übliche Sicherheits- und Rückschlagventil 22 von dem zweiten Durchlauferhitzer 16 versorgt. Der Zulauf zu dem Durchlauferhitzer 19 erfolgt jedoch nicht wie bei den beiden vorgenannten Erhitzern, kontinuierlich sondern absatzweise, ge- steuert durch eine an sich bekannte Niveau-Regulierung. Der Dampfaustritt ist bei 23 angedeutet.

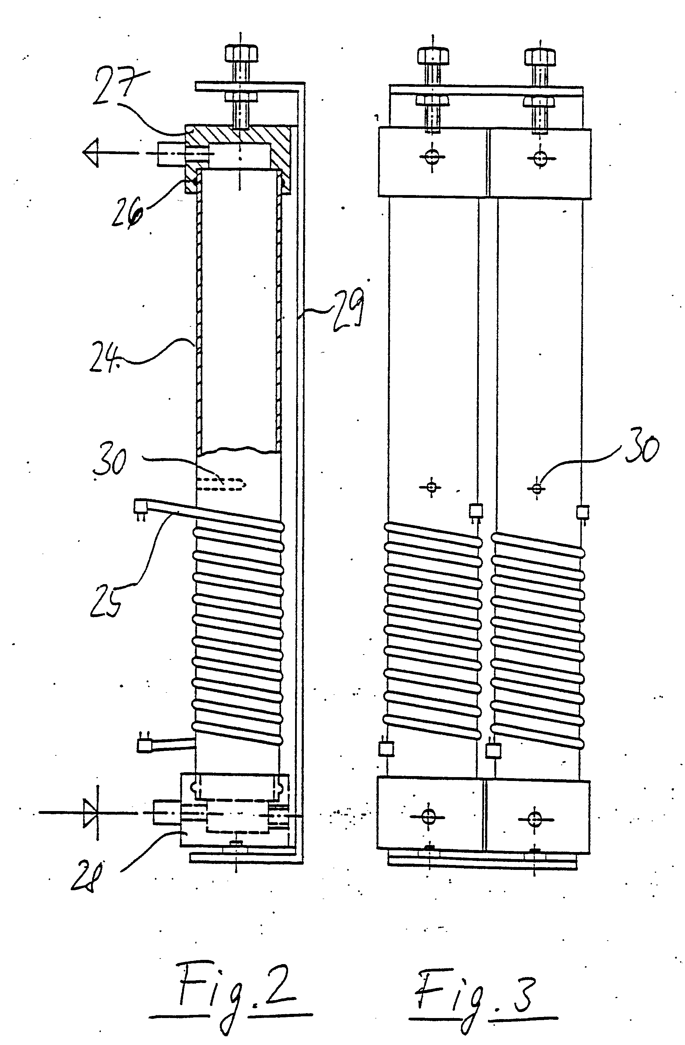

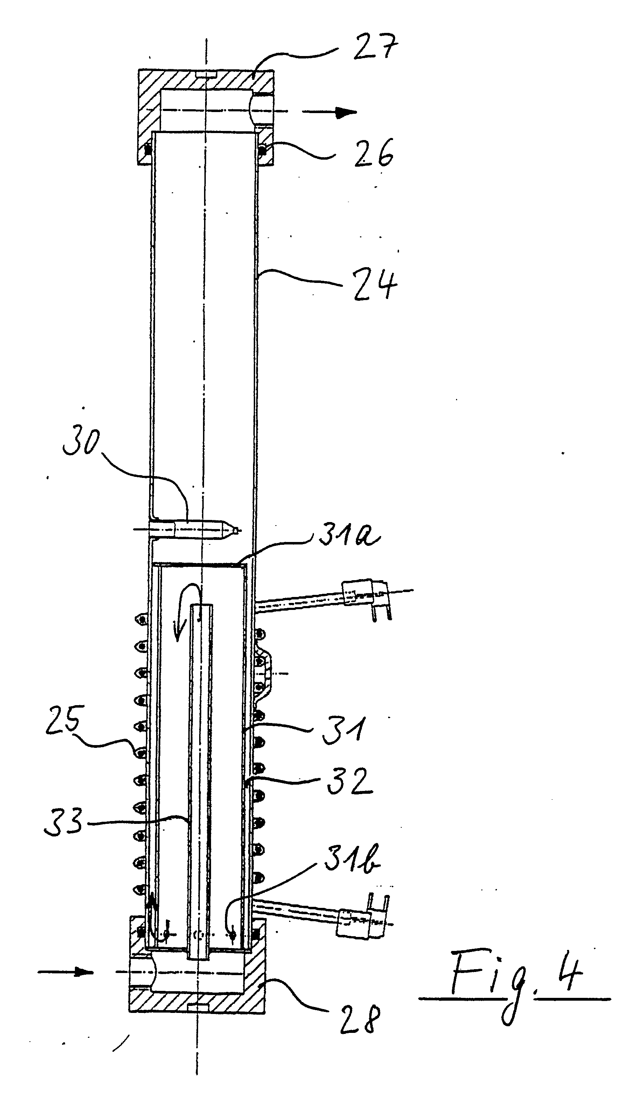

Der genauere Aufbau der Durchlauferhitzer ergibt sich aus den Fig. 2 und 3. Jeder Dampferzeuger besteht aus einem zylindrischen Rohr 24, daß an seiner Außenseite über zumindest Teil seiner Höhe von einer Heizschlange 25 umgeben ist. Die Heizschlange 25 weist in ihrem Kern einen Widerstands-Heizdraht auf, der gegenüber dem metallischen Mantel der Heizschlange in bekannter Weise isoliert ist. Wesentlich ist, daß die Heizschlange mittels zwischengelegter Lötfolie metallisch breitflächig mit dem Rohr 24 verbunden ist, so daß sich ein inniger, spaltfreier Kontakt und dementsprechend gute Wärmeübertragung ergibt.

Wesentlich ist ebenso, daß das Volumen des Rohres 24 gegenüber herkömmlichen Boilern auf etwa ein Zehntel reduziert ist und zweckmäßig nur etwa 0,1 Liter bis 0,4 Liter beträgt. Damit ist neben den bereits angesprochenen günstigen Herstellungskosten sichergestellt, daß jede Tasse Kaffee oder Tee mit frischem, nicht abgestandenem oder mehrfach aufgewärmtem Wasser zübereitet wird.

Zum Anschluß an den Wasserkreislauf ist das Rohr 24 an seinen beiden Enden über Dichtringe 26 in passende Anschlußkappen 27 und 28 eingesteckt. Diese Anschlußkappen sind in einem C-förmigen Halter 29 derart montiert, daß das Rohr axial zwischen ihnen eingespannt wird. Auf diese Weise läßt sich das Rohr 24 jederzeit schnell ausbauen, insbesondere, wenn es entkalkt werden soll.

Schließlich ist in den Fig. 2 und 3 durch das Bezugszeichens 30 ein Temperaturfühler angedeutet. Er dient zur Steuerung der jeweiligen Heizschlange 25, damit die gewünschte Solltemperatur des Wassers eingehalten wird. Diese Steuerung erfolgt für jeden Durchlauferhitzer getrennt und unabhängig von den übrigen Durchlauferhitzern.

Eine besonders zweckmäßige Weiterbildung der Erfindung besteht darin, die Steuerung der Heizschlange 25 nicht allein über den Temperaturfühler 30 vorzunehmen, sondern die Heizung unabhängig von der Temperatur immer dann anzuschalten, wenn an der Kaffeemaschine der Taster für die Ausgabe von Kaffee oder Tee betätigt wird. Das Einschalten erfolgt für eine vorgegebene Zeit, je nachdem welcher Taster gedrückt wird. Wird beispielsweise der Tasterfür eine Tasse Kaffee gedrückt, so erfolgt die Beheizung während einer Zeit von 2 - 6 Sekunden, insbesondere 2 - 3 Sekunden, während bei Betätigung des Tasters für 2 Tassen Kaffee die Heizdauer entsprechend länger ist. Bei Espresso, wo weniger Wasser benötigt wird, kann die Heizzeit etwas verkürzt werden.

Erfindungsgemäß werden also die Temperaturfühler nur für die Heizungssteuerung im statischen Zustand verwendet, wogegen es bei Betätigung der Kaffeemaschine immer zu einer sofortigen Zwangseinschaltung kommt. Der Durchlauferhitzer reagiert dadurch wesentlich schneller, als wenn abgewartet werden müßte, bis der Temperaturfühler die durch nachfließendes Kaltwasser erfolgende Temperaturabsenkung erkennt.

Die Zwangseinschaltung erfolgt derart, daß durch die Betätigung des jeweiligen Tasters für eine Tasse Kaffee, zwei Tassen Kaffee oder Tee ein elektronischer Zeitschalter ausgelöst wird, der für eine dem Taster zugeordnete Zeitspanne die Heizung einschaltet.

In dieser Maßnahme liegt ein wesentlicher Grund dafür, daß die Erfindung mit derart kleinen Durchlauferhitzern auskommt.

Fig. 4 zeigt eine Weiterentwicklung des Durchlauferhitzers. Von außen hat er den gleichen Aufbau wie die zuvor beschriebenen Bauformen und trägt insoweit auch die gleichen Bezugszeichen. Da er nicht auf Kaffeemaschinen beschränkt ist, kann sein Volumen kleiner aber auch größer als bei dem vorbeschriebenen Rohrheizer sein.

Im Inneren des Rohres 24 ist jedoch ein zylindrischer Einsatz 31 eingebaut, der oben durch einen Deckel 31a verschlossen ist, während er unten zahlreiche über den Umfang verteilte Ausströmöffnungen 31b aufweist. Diese Ausströmöffnungen münden am unteren Ende des Rohres 24 in einen zwischen dem Einsatz und dem Rohr 24 verlaufenden Ringspalt 32.

Außerdem ist das Rohr 24 im Gegensatz zu dem zuvor beschriebenen Ausführungsbeispiel verschlossen und kann nur über ein zentrales Wasserzuführrohr 33 mit Flüssigkeit gespeist werden. Dieses Rohr 33 läuft bis nahe an das obere Ende des zylindrischen Einsatzes 31. Dort wird die Flüssigkeit nach unten umgelenkt, strömt über die axiale Länge des Einsatzes zurück, bis sie über die Öffnungen 31b in den Spalt 32 gelangt und von dort nach oben abströmt.

Durch die Spaltströmung längs der beheizten Innenwand des Rohres 24 und durch die mehrfache Durchströmung der axialen Länge des beheizten Rohrabschnittes ergibt sich eine gravierende Verbesserung des Wärmeüberganges.

Der beschriebene Rohrheizer ist aufgrund seiner hohen Heizleistung und seines kompakten, kostengünstigen Aufbaues optimal zur Bereitung von Heißgetränken oder zur Dampferzeugung für Kochgeräte geeignet.

**Ansprüche**

1. Kaffeemaschine mit zumindest einem dem Wassereintritt (1) nachgeschalteten Filter (2) und zumindest einer Pumpe (5), an die zumindest ein elektrisch beheizter Strömungskanal zur Erzeugung von Heißwasser angeschlossen ist, das in vorbestimmbarer Menge zu einem Brühkolben (11) und schließlich zum Kaffee-Auslauf (12) gelangt,
dadurch gekennzeichnet,
daß der Strömungskanal durch einen an sich bekannten rohrförmigen Durchlauferhitzer (8) gebildet ist, an dessen Außenwand eine mit ihr metallisch verbundene Heizschlange (25) angebracht ist, daß das Volumen des Durchlauferhitzers (8) maximal 1,0 Liter beträgt und daß das Frischwasser zumindest annähernd kontinuierlich entsprechend der Wasserabgabe in den Durchlauferhitzer nachfließt.

2. Kaffeemaschine nach Anspruch 1,
dadurch gekennzeichnet,
daß das Volumen des Durchlauferhitzers (8) maximal etwa 0,5 Liter, zweckmäßig etwa 0,15 Liter bis etwa 0,4 Liter beträgt.

3. Kaffeemaschine nach Anspruch 1 oder 2,
dadurch gekennzeichnet,
daß der Wassereintritt in den Durchlauferhitzer-(8) kontinuierlich und proportional entsprechend der Wasserabgabe erfolgt.

4. Kaffeemaschine nach einem der vorhergehenden Ansprüche,
dadurch gekennzeichnet,
daß für Kaffeewasser und Teewasser jeweils ein eigener Durchlauferhitzer (8 bzw. 16) vorgesehen ist.

5. Kaffeemaschine nach einem der vorhergehenden Ansprüche,
dadurch gekennzeichnet,
daß ein weiterer Durchlauferhitzer (19) zur Damperzeugung vorgesehen ist.

6. Kaffeemaschine nach einem der vorhergehenden Ansprüche,
dadurch gekennzeichnet,
daß die Durchlauferhitzer (8, 16) für Kaffee- und Teewasser eine eigene Temperatursteuerung aufweisen.

7. Kafeemaschine nach einem der vorhergehenden Ansprüche,
dadurch gekennzeichnet,
daß alle Durchlauferhitzer (8, 16, 19) von der gleichen Pumpe (5) gespeißt werden.

8. Kaffeemaschine nach einem der vorhergehenden Ansprüche,
dadurch gekennzeichnet,
daß die Durchlauferhitzer vertikal stehend eingebaut sind.

9. Durchlauferhitzer nach einem der vorhergehenden Ansprüche,
dadurch gekennzeichnet,
daß die Heizschlange (25) unter Zwischenlage einer Lötfolie mit der Außenwand des rohrförmigen Durchlauferhitzers (8, 16, 19) verlötet ist.

10. Kaffeemaschine nach Anspruch 9,
dadurch gekennzeichnet,
daß die Heizschlange (25) schraubengangförmig den Durchlauferhitzer (8, 16, 19) umgibt.

11. Kaffeemaschine nach einem der vorhergehenden Ansprüche,
dadurch gekennzeichnet,
daß die Heizschlange (25) außen von einer Isolierung umgeben ist.

12. Kaffeemaschine nach einem der vorhergehenden Ansprüche,
dadurch gekennzeichnet,
daß sich die Heizschlange (24) nur über einen unteren Teilbereich der Höhe des Durchlauferhitzers (8, 16, 19) erstreckt.

13. Kaffeemaschine nach einem der vorhergehenden Ansprüche,
dadurch gekennzeichnet,
daß der Durchlauferhitzer (8, 16, 19) aus jeweils einem kreiszylindrischen Rohr (24) besteht, daß an seinem oberen und seinem unteren Ende mit Dichtungsringen (26) in passende Endkappen (27, 28) eingesteckt ist, die ihrerseits axial miteinander verspannbar sind.

14. Kaffeemaschine nach einem der vorhergehenden Ansprüche,
dadurch gekennzeichnet,
daß die Beheizung des Durchlauferhitzers (8) durch einen Temperaturfühler (30) gesteuert wird, daß die Heizung jedoch zwangsweise, unabhängig von der aktuellen Temperatur für eine vorgegebene Zeitspanne eingeschaltet wird, sobald Kaffe- oder Teewasser abgerufen wird.

15. Rohrheizer zur Bereitung von Heißgetränken oder zur Dampferzeugung für Kochgeräte, insbesondere für eine Kaffeemaschine nach einem der vorhergehenden Ansprüche, bestehend aus einem rohrförmigen Durchlauferhitzer, der innen von dem zu erhitzenden Wasser durchströmt wird und der an seiner Außenwand eine mit ihr wärmeleitend verbundene elektrische Heizschlange aufweist,
dadurch gekennzeichnet,
daß im Inneren des Rohrheizers ein zylindrischer Einsatz (31) etwa koaxial unter Bildung eines Spaltes gegenüber der Innenwand (24) des Heizers angeordnet ist, der an seinem einen Ende (31a) verschlossen, an seinem anderen Ende mit Ausströmöffnungen (31b) versehen ist, die in den genannten Spalt (32) münden, wobei die Wasserzufuhr in den zylindrischen Einsatz (31) erfolgt.

16. Rohrheizer nach Anspruch 15,
dadurch gekennzeichnet,
daß die Wasserzufuhr in den zylindrischen Einsatz (31) nahe dessen verschlossenem Ende (31a) erfolgt.

17. Rohrheizer nach Anspruch 16,
dadurch gekennzeichnet,
daß die Wasserzufuhr durch ein den zylindrischen Einsatz (31) etwa koaxial durchquerendes und bis nahe an dessen geschlossenes Ende (31a) laufendes Wasserzuführrohr (33) erfolgt.

18. Rohrheizer nach einem der Ansprüche 15 bis 17,
dadurch gekennzeichnet,
daß sich der zylindrische Einsatz (31) etwa über die axiale Länge der Heizschlange (25) erstreckt.

19. Rohrheizer nach einem der Ansprüche 15 bis 18, dadruch gekennzeichnet, daß der Spalt (32) von unten nach oben durchströmt wird und der zylindrische Einsatz (31) oben verschlossen und unten an den Spalt (32) angeschlossen ist.

Fig. 1

Fig.2          Fig.3

Fig. 4